# FASCICULE DE BREVET EUROPEEN

(11) **EP 1 095 068 B1**
(45) Date de publication et mention de la délivrance du brevet: **16.08.2006**
(21) Numéro de dépôt: 99919350.1
(22) Date de dépôt: 19.05.1999
(51) Int. Cl.: C08F 8/00

(54) **POLYMERES SEQUENCES GREFFES CONTENANT AU MOINS UNE SEQUENCE POLYOLEFINIQUE OU POLYDIENIQUE COMPORTANT UN CYCLE SUCCINIMIDE SUBSTITUE SUR L'AZOTE**
MINDESTENS EIN POLYOLEFIN- ODER POLYDIEN-BLOCK ENTHALTENDE GEPFROPFTE BLOCKCOPOLYMERE MIT AN STICKSTOFF SUBSTITUIERTEN BERNSTEINSÄUREIMIDE-RINGEN
GRAFTED BLOCK POLYMERS CONTAINING AT LEAST A POLYOLEFIN OR POLYDIENE SEQUENCE COMPRISING A SUCCINIMIDE CYCLE SUBSTITUTED ON NITROGEN

(30) Priorité: 10.06.1998 FR 9807401
(43) Date de publication de la demande: 02.05.2001
(73) Titulaire: Institut Français du Pétrole, 92852 Rueil-Malmaison Cedex (FR)
(72) Inventeur: CAMBERLIN, Yves, F-69300 Caluire (FR); GRENIER, Jacky, F-38890 Vignieu (FR); GONZALVEZ, Serge, F-69150 Décines (FR); VALLET, Jacques, F-69008 Lyon (FR)
(86) Numéro de dépôt international: PCT/FR1999/001190
(87) Numéro de publication internationale: WO 1999/064478

(56) Documents cités:
- EP-A- 0 324 547
- EP-A- 0 438 240
- DE-A- 4 333 670
- DE-A- 19 502 206
- DE-A- 19 519 855
- DE-A- 19 610 362
- US-A- 5 338 802
- US-A- 5 461 116
- DATABASE WPI Section Ch, Week 9406 Derwent Publications Ltd., London, GB; Class A12, AN 94-045488 XP002093924 & JP 06 001816 A (ASAHI CHEM IND CO LTD), 11 janvier 1994 (1994-01-11)

## Description

L'invention concerne des polymères séquencés contenant au moins une séquence de type polyoléfine saturée ou insaturée, ou polydiène, linéaire ou ramifiée, comportant au moins un cycle succinimide substitué sur l'azote par un groupement réactif, ledit cycle étant supporté soit par la chaîne principale, soit par une chaîne latérale, et contenant au moins une séquence de nature variée, autre que du type polyoléfine. Les polymères utilisés pour la préparation des polymères de l'invention sont de type élastomères thermoplastiques et sont bi -, tri -, ou multiséquencés.

L'invention a également pour objet des mélanges de plusieurs polymères séquencés greffés comme définis précédemment et des mélanges de tels polymères séquences greffés avec d'autres polynières, tels que par exemple des polymères du type polyamide, polyéther, polyoléfine ou polyuréthanne, Il est possible d'ajouter au mélange des substances afin d'obtenir des propriétés favorables pour des applications souhaitées. Le document de brevet EP-0 295 706 A2 fait mention de ces différentes substances. A titre d'exemples, le mélange de polymères peut contenir des stabilisants, comme des antioxydanu ou des absorbants ultraviolet, des lubrifiants, des colorants ou des retardateurs de flamme, des agents de nucléation, des agents plastifiants de type huiles paraffiniques ou naphténiques, des fibres de renfort qui augmentent la valeur du module d'Young et la résistance à la rupture, comme par exemple les fibres de verre, de carbone ou de bore ou les fibres céramiques, des charges organiques ou inorganiques, comme par exemple le dioxyde de titane ou l'oxyde de zinc.

Concernant l'état actuel de la technique, l'article du Journal of Applied Polymer Science, 1997, vol 63, n°3, pages 275-281, montre qu'une addition en petite quantité d'une polyoléfine greffée par un anhydride maléique dans un mélange PE-BD (polyéthylène basse densité) /PP (polypropylène) améliore la compatibilité entre ces deux polymères, initialement non miscibles entre eux. Une autre méthode pour améliorer la compatibilité consiste à introduire un copolymère entre deux phases de polymères incompatibles, afin de favoriser les propriétés mécaniques du mélange obtenu. Dans un autre article du Journal of Applied Polymer Science, 1997, vol 65, n°2, pages 2457-2469, un copolymère greffé PBT/EVA poly (butylène-téréphtalate) / copoly (éthylène-acétate de vinyle) rend compatible des mélanges de PE/PBT [polyéthylène poly (butylène-téréphtalate)]. Un nombre croissant d'unités d'acétate de vinyle dans un copolymère EVA augmente la compatibilité avec le PE. L'addition du copolymère contenant des éléments miscibles avec les composants du mélange change la morphologie du système. En effet, la taille des particules de PBT est réduite, ce qui favorise la compatibilité entre ces deux phases.

Le document DE-A-4 333 670 décrit des copolymères séquencés greffés par réaction avec un composé maléimide, dont les séquences sont des séquences polypropylènes et des séquences poymériques d'une autre oléfine.

La présente invention concerne des copolymères séquencés modifiés contenant un groupement réactif qui se greffe sur au moins une séquence polyoléfine ou polydiène, en vue d'améliorer la dispersion et les propriétés d'adhésion, et qui comportent en outre au moins une séquence de nature différente de celles de type polyoléfine ou polydiène. Il s'agit de copolymères séquencés greffés qui ont des propriétés adhésives améliorées par rapport aux polymères séquencés non greffés. Ils peuvent être en particulier utilisés comme adhésifs, compatibilisants ou agents résiliants.

Les copolymères de type polyoléfine ou polydiène séquencés greffés de l'invention possèdent des groupes réactifs qui permettent leur utilisation pour la fabrication de mélanges de polymères. Ils contiennent au moins un cycle succinimide substitué sur l'azote par un groupement réactif, ledit cycle étant supporté soit par la chaîne principale, soit par une chaîne latérale résultant de la réaction d'au moins un polymère séquencé sur un composé comportant au moins un cycle maléimide substitué sur l'azote par un groupement réactif de formule -R(-X)ₙ , dans laquelle -X représente un groupement réactif, n est un nombre égal ou supérieur à 1 et -R est un reste comportant au moins un atome de carbone, et comprennent également les polymères qui en dérivent par réaction avec au moins un polyépoxyde contenant dans sa molécule au moins deux groupes époxydes. Le composé comportant le cycle maléimide est représenté par la formule (I) suivante :

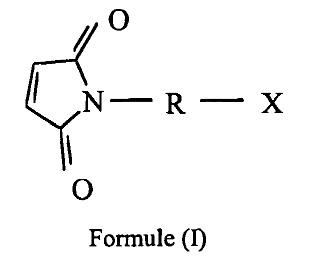

Le groupe réactif -X est habituellement choisi parmi le groupe hydroxyle, un groupe carboxylique, un groupe carboxamide, un groupe halogénure d'acide carboxylique, un groupe thiol, un groupe thiocarboxylique, un groupe amino, un halogène, un groupe époxy, un groupe carboxylique estérifié dont la partie ester comporte un groupe réactif. Dans le cas où plusieurs groupes -X sont présents, ils peuvent être identiques entre eux ou différents.

Ce groupe réactif est le plus souvent choisi soit parmi les groupes capables de réagir avec les fonctions époxydes par ouverture du cycle oxiranne, dans le cas d'un reste comportant au moins un polyépoxyde, soit parmi le groupe carboxylique, le groupe carboxamide et les groupes halogénures d'acides, par exemple un groupe chlorure d'acide carboxylique. Le groupe préféré est le groupe carboxylique.

Le groupe -R- est habituellement choisi parmi les groupes hydrocarbonés aliphatiques, saturés ou insaturés, substitués ou non, les groupes aromatiques substitués ou non substitués. On préfère généralement des groupes non substitués et le plus souvent des groupes comportant au moins un noyau aromatique. A titre d'exemples de groupes que l'on trouve fréquemment, on peut citer les groupes benzéniques reliés en ortho, méta ou para d'une part à l'atome d'azote et d'autre part au groupe réactif -X. On utilise le plus souvent la forme liée en para ou celle liée en méta.

Le polyépoxyde utilisé dans la présente invention, contenant dans sa molécule au moins deux groupes époxydes est le plus souvent choisi dans le groupe formé par les polyépoxydes aliphatiques, les polyépoxydes cycloaliphatiques et les polyépoxydes aromatiques. A titre d'exemples de composés très souvent employés, on peut citer le diglycidyléther du bis-phénol-A ou celui du bis-phénol-F, le triglycidyléther-isocyanurate et/ou le triglycidyléther-cyanurate et/ou le triglycidyl-isocyanurate et/ou le triglycidyl-cyanurate ou les époxydes novolaques, ou les mélanges d'au moins deux de ces composés. Les composés époxydés comprenant au moins deux groupes époxydes cités dans le brevet US-A-4 921 047 sont également utilisables dans le cadre de la présente invention. L'enseignement de ce brevet doit être considéré comme partie intégrante de la présente description du seul fait de sa mention.

La séquence apte au greffage des copolymères séquencés greffés est du type polysoprène, polybutadiène, poly (éthylène-butylène), poly (éthylène-propylène) ou autres polyoléfines et est éventuellement greffée par des chaînons du type polyisoprène ou polybutadiène.

Les séquences autres que celles du type polyoléfine ou polydiène, contenues dans les copolymères séquencés de la présente invention, sont de nature variée. Elles sont obtenues par les voies classiques de polymérisation bien connues de l'homme du métier, par addition, par condensation ou par ouverture de cycle. A titre d'exemples non limitatifs, on peut citer les polystyrènes, les polyvinyles et leurs dérivés, tels que les poly-halogénures de vinyle, les poly-vinyl-acétals, poly-acétates de vinyle, polyalcools vinyliques, les polyesters vinyliques ou les polyéthers vinyliques, les polysulfures, dont les polysulfures de phénylène, les polyacrylonitriles, les polyéthers, dont les polyoxydes d'alkylènes et les polyéther-phényles, les polyesters, les polyacides acryliques, les polyamides, dont les polyacrylamides, les polyimides, dont les polyéther-imides, les polyamide-imides, les polyuréthannes, les polyurées, les poly-uréthanne-urées, les poly-ester-uréthannes, les poly-éther-uréthannes, les polysulfones, les polycétones, les polyesters aromatiques, dont les polycarbonates, les polyéthylèneglycols, les polyacrylates et polyméthacrylates, les polysiloxanes, les poly-éther-sulfones, les poly-éther-cétones, les polymères organo-métalliques, tels que par exemple les silicones, et les polymères contenant du phosphore ou d'autres hétéroatomes.

Les copolymères séquencés greffés de la présente invention sont préparés par différentes méthodes. Une première méthode consiste en la mise en contact du polymère séquencé contenant au moins une séquence de nature variée et au moins une séquence de type polyoléfine ou polydiène à l'état fondu avec au moins un composé comportant un cycle maléimide substitué sur l'azote par un groupement réactif, au sein d'un mélangeur ou dans une extrudeuse, en vue de l'obtention d'un polymère séquencé greffé.

La mise en contact d'un copolymère séquencé contenant au moins une séquence de nature variée et au moins une séquence de type polyoléfine ou polydiène à l'état fondu avec au moins un composé comportant un cycle maléimide substitué sur l'azote par un groupement réactif et au moins un composé contenant dans sa molécule au moins deux groupes époxydes, au sein d'un mélangeur ou d'une extrudeuse, permet également d'obtenir des polymères séquencés greffés.

Ce type de préparation peut être effectué avec ou sans amorceur radicalaire. A titre d'exemples d'amorceurs radicalaires, on peut citer les peroxydes. Dans le cadre de la présente invention, on préfère habituellement travailler sans amorceur radicalaire. Cette possibilité de formation sans amorceur radicalaire de polymères contenant un cycle succinimide substitué sur l'azote par un groupement réactif, ledit cycle étant supporté soit par la chaîne principale, soit par une chaîne latérale, est un avantage certain de la présente invention, qui permet d'éviter les risques de coupures et les risques de réticulation du polymère. La température de la réaction est habituellement comprise entre environ la température de fusion du polymère et environ 300 °C. Le plus souvent, cette température est d'environ 200 °C à environ 260 °C. La durée de la réaction est relativement faible et ne dépasse pas habituellement 10 minutes. On préfère habituellement utiliser le système par extrusion-réaction, qui donne de très bons résultats.

Une autre méthode de préparation des copolymères séquences greffés de la présente invention consiste dans une étape (a) en la mise en contact du copolymère séquencé contenant au moins une séquence de nature variée et au moins une séquence de type polyoléfine ou polydiène à l'état fondu avec au moins un composé comportant un cycle maléimide substitué sur l'azote par un groupement réactif au sein d'un mélangeur ou dans une extrudeuse, puis dans une étape (b) on introduit au sein du mélangeur ou dans l'extrudeuse au moins un composé contenant dans sa molécule au moins deux groupes époxydes. Cette préparation peut être effectuée avec ou sans amorceur radicalaire. A titre d'exemples d'amorceurs radicalaires, on peut citer les peroxydes. Dans le cadre de la présente invention, on préfère habituellement travailler sans amorceur radicalaire. Cette possibilité de formation sans amorceur radicalaire de polymères contenant un cycle succinimide substitué sur l'azote par un groupement réactif, ledit cycle étant supporté soit par la chaîne principale, soit par une chaîne latérale, est un avantage certain de la présente invention, qui permet d'éviter les risques de coupures et les risques de réticulation du copolymère. La température de la réaction dans l'étape (a) comme dans l'étape (b) est habituellement comprise entre environ la température de fusion de la polyoléfine et environ 300 °C. Le plus souvent, cette température est d'environ 200 °C à environ 260 °C. La durée de la réaction est relativement faible et ne dépasse pas habituellement 10 minutes pour chacune des étapes. On préfère habituellement utiliser le système par extrusion-réaction, qui donne de très bons résultats. La température est le plus souvent identique dans les deux étapes.

La présente invention concerne également des mélanges comprenant au moins deux polymères différents l'un de l'autre dont l'un au moins est un copolymère séquencé greffé comportant au moins une séquence de type polyoléfine ou polydiène avec au moins un cycle succinimide substitué sur l'azote par un groupement réactif et d'autres séquences de nature variée, tel que décrit précédemment, ou un copolymère préparé selon l'une des méthodes de préparation décrites précédemment. La fonction réactive présente dans le copolymère séquencé greffé améliore la formation desdits mélanges. Ces mélanges sont utilisés pour la fabrication d'adhésifs, car ces derniers possèdent des propriétés adhésives meilleures que celles des mélanges de polymères contenant des polymères séquencés sans greffon. Ils sont également utilisés pour la fabrication de produits obtenus par les différents procédés de transformation tels que l'extrusion, l'injection ou le calandrage et autres procédés de transformation, ou encore pour la fabrication de matériaux multicouches, adhésifs ou comme agents résiliants.

Selon la proportion des différentes séquences dans le copolymère séquencé greffé, les propriétés mécaniques sont changées. En effet, si la proportion de polyoléfine greffée est faible et que les autres séquences représentent des polymères aux propriétés mécaniques rigides, le copolymère séquencé greffé est résistant aux chocs.

Les exemples suivants illustrent l'invention sans en limiter la portée.

### Exemple 1

On introduit 45 grammes (g) d'élastomère thermoplastique SEBS (Styrène-EthylèneButylène-Styrène), commercialisé par la société Asahi Chemical Industry Co Ltd sous la référence TUFTEC H1041® et dont la densité mesurée par la méthode ASTM D297 est de 0,91, et 0,45 g d'acide 4-maléimidobenzoïque (AMB) dans un mélangeur interne de marque Haake Rhéocord®.

La température de travail est de 240°C, la vitesse de rotation des pales est de 64 tours par minutes (tr/min). Après 5 minutes (min) de mélange à 240 °C, le produit du mélange est refroidi dans l'air, séché à 60 °C sous 1 millimètre (mm) de mercure pendant 8 heures. Les résultats des tests d'adhésion sur le produit obtenu figurent dans le tableau 1 ci-après.

### Exemple 2

On introduit 44 g d'élastomère thermoplastique commercialisé par la société Asahi Chemical Industry Co Ltd sous la référence TUFTEC H1041® avec 0.44 g d'AMB et 2,02 g d'ARALDITE GT7071® commercialisé par la société Ciba-Geigy (dont l'indice d'époxyde est de 2 et l'équivalent époxyde de 500) dans un mélangeur interne de marque Haake Rhéocord®.

La température de travail est de 240 °C. la vitesse de rotation des pales est de 64 tr/min. Après 5 min de mélange à 240 °C, le produit du mélange est refroidi dans l'air, séché à 60 °C sous 1 millimètre de mercure pendant 8 heures. Les résultats des tests d'adhésion sur le produit obtenu figurent dans le tableau 1 ci-après.

### Exemple 3

Dans cet exemple on décrit la préparation d'un polymère greffé dans un mélangeur en deux étapes successives.

On introduit 44 g de SEBS commercialisé par la société Asahi Chemical Industry Co Ltd sous la référence TUFTEC H1041® et 0,44 g d'AMB dans un mélangeur interne de marque Haake Rhéocord®.

La température de travail est de 240 °C, la vitesse de rotation des pales est de 64 tr/min. Après 2 minutes de mélange à 240 °C, on additionne 2,02 g d'ARALDITE GT7071® et on maintient la température à 240 °C encore minutes après cette addition. Le produit obtenu dans cette deuxième étape est refroidi dans l'eau, séché à 60 °C sous 1 millimètre de mercure pendant 8 heures. Les résultats des tests d'adhésion sur le produit obtenu figurent dans le tableau 1 ci-après.

### Exemple 4

On répète la procédure décrite dans l'Exemple 1 en utilisant 45 g de SEBS commercialisé par la société Asahi Chemical Industry Co Ltd sous la référence TUFTEC H1042® dont la densité mesurée par la méthode ASTM D297 est de 0,89 et 0.45 g d'AMB. Les résultats des tests d'adhésion sur le produit obtenu figurent dans le tableau 1 ci-après.

### Exemple 5

On répète la procédure décrite dans l'Exemple 2 en utilisant 44 g de SEBS commercialisé par la société Asahi Chemical Industry Co Ltd sous la référence TUFTEC H1042®, avec 0,44 g d'AMB et 2,02 g d'ARALDITE GT7071®. Les résultats des tests d'adhésion sur le produit obtenu figurent dans le tableau 1 ci-après.

### Exemple 6

On répète la procédure décrite dans l'Exemple 1 en utilisant 45 g de SEBS commercialisé par la société Asahi Chemical Industry Co Ltd sous la référence TUFTEC H1052® et dont la densité mesurée par la méthode ASTM D297 est de 0,89 et 0,45 g d'AMB. Les résultats des tests d'adhésion sur le produit obtenu figurent dans le tableau 1 ci-après.

### Exemple 7

On répète la procédure décrite dans l'Exemple 2 en utilisant 44 g de SEBS commercialisé par la société Asahi Chemical Industry Co Ltd sous la référence TUFTEC H1052® avec 0,44 g d'AMB et 2,02 g d'ARALDITE GT7071®. Les résultats des tests d'adhésion sur le produit obtenu figurent dans le tableau 1 ci-après.

### Exemple 8

On répète la procédure décrite dans l'Exemple 2 en utilisant 44 g de SEBS commercialisé par la société Asahi Chemical Industry Co Ltd sous la référence TUFTEC H1052® avec 0,44 g d'AMB et 2,44 g d'ARALDITE ECN 9699®, commercialisé par la société Ciba-Geigy (dont l'indice d'époxyde est de 4.65). Les résultats des tests d'adhésion sur le produit obtenu figurent dans le tableau 1 ci-après.

### Exemple 9

On répète la procédure décrite dans l'Exemple 1 en utilisant 45 g de SEBS commercialisé par la société Asahi Chemical Industry Co Ltd sous la référence TUFTEC H1075® et dont la densité mesurée par la méthode ASTM D297 est de 0,89, et 0,45 g d'AMB. Les résultats des tests d'adhésion sur le produit obtenu figurent dans le tableau 1 ci-après.

### Exemple 10

On répète la procédure décrite dans l'Exemple 2 en utilisant 44 g de SEBS commercialisé par la société Asahi Chemical Industry Co Ltd sous la référence TUFTEC H1075® avec 0,44 g d'AMB et 2.02 g d'ARALDITE GT7071®. Les résultats des tests d'adhésion sur le produit obtenu figurent dans le tableau 1 ci-après.

### Exemple 11

Dans cet exemple, on décrit un mélange formé d'un polymère séquencé greffé et d'un élastomère. On introduit 30 g de SEBS commercialisé par la société Asahi Chemical Industry Co Ltd sous la référence TUFTEC H1052® et 10 g du produit l'exemple 6 dans un mélangeur interne de marque Haake Rhéocord®.

La température de travail est de 240 °C, la vitesse de rotation des pales est de 64 tr/min. Après 5 min de mélange à 240 °C, le produit du mélange est refroidi dans l'air, séché à 60 °C sous 1 millimètre de mercure pendant 8 heures. Les résultats des tests d'adhésion sur le produit obtenu figurent dans le tableau 1 ci-après.

### Exemple 12

On répète la procédure décrite dans l'Exemple 11 en utilisant 30 g de SEBS commercialisé par la société Asahi Chemical Industry Co Ltd sous la référence TUFTEC H1052® et 10 g du produit l'exemple 7. Les résultats des tests d'adhésion sur le produit obtenu figurent dans le tableau 1 ci-après.

### Exemple 13

On introduit 45 g de copolymère séquencé butadiène-styrène commercialisé par la société Négromex sous la référence HOUSMEX TR 1110® et 0,45 g d'AMB dans un mélangeur interne de marque Haake Rhéocord®.

La température de travail est de 300 °C, la vitesse de rotation des pales est de 32 tr/min. Après 5 minutes (min) de mélange à 200°C, le produit du mélange est refroidi dans l'air, séché à 60 °C sous 1 millimètre (mm) de mercure pendant 8 heures. Les résultats des tests d'adhésion sur le produit obtenu figurent dans le tableau 1 ci-après.

### Exemple 14

Dans cet exemple, on décrit la préparation d'un polymère en utilisant une extrudeuse corotative bi-vis CLEXTRAL vendue sous la référence BC31® , dont le rapport longueur sur diamètre est de 28. Les vis ont un diamètre de 25 millimètres (mm) et l'extrudeuse est équipée d'une filière dont le diamètre est de 4 mm.

On introduit dans la trémie d'alimentation des granulés de SEBS commercialisé par la société Asahi Chemical Industry Co Ltd sous la référence TUFTEC H1042®. Le débit de granulés introduits dans l'extrudeuse est de 5 kilogrammes par heure (kg/h).

On introduit simultanément dans la trémie d'alimentation de la machine par l'intermédiaire d'un doseur de poudre de K-TRON vendu sous la référence KM-T20®, un mélange équimolaire d'AMB et d'ARALDITE GT7071®. Le débit de poudre est de 0.2 kg/h. Le débit total des produits est de 5,2 kg/h. La température au sein de l'extrudeuse est maintenue à 240 °C, la vitesse de rotation des vis est de 100 tr/min, le temps de séjour est de 1 minute. Le jonc qui sort de la filière est refroidi dans de l'eau à 25 °C. Il est granulé et séché.

### Exemple 15

On effectue ensuite avec les divers produits préparés dans les exemples 1 à 14 des tests d'adhésion sur éprouvettes métalliques en ACIER XC 35.

Les propriétés d'adhésion des compositions sont déterminées selon la méthode ASTM D1002.

La procédure de test suivie comprend la préparation des éprouvettes métalliques.

Chaque éprouvette est nettoyée par trempage dans de l'éther de pétrole, puis décapée en surface à l'aide d'une brosse métallique.

On délimite sur une éprouvette une surface de collage de 25,4 x 12,7 mm et à l'aide de cales, une épaisseur maximum du joint de colle de 125 x 10⁻⁶ m. Le collage des deux éprouvettes est effectué à l'aide d'une presse à plateau DARRAGON® préchauffée avec l'application d'une pression de 0.5 MPa pendant 1 minute.

On réalise ensuite un test de traction sur une machine de type INSTRON® équipé d'une tête de mesure de 10⁵ Newton. La vitesse de déplacement de la traverse est de 1 mm/min.

Les résultats des essais des tests de collage sont mentionnés dans le tableau 1 ci-après. Les valeurs données correspondent à la valeur moyenne obtenue sur 10 essais successifs. A titre de comparaison, des tests ont été effectués sur les produits commerciaux utilisés pour réaliser les produits de l'invention, sur un élastomère thermoplastique commercialisé par la société Shell sous la référence KRATON G 1901X® et sur le butadiène-styrène commercialisé par la société Négromex sous la référence HOUSMEX TR 1110®.

**Tableau 1**

| RÉFÉRENCE | TEMPÉRATURE DE COLLAGE (en °C) | CHARGE MAXIMALE (en kN) | NATURE DE LA RUPTURE |
|---|---|---|---|
| TUFTEC H1041 | 250 | 0.43 | adhésive |
| TUFTEC H1042 | 250 | 0.17 | adhésive |
| TUFTEC H1052 | 250 | 0.34 | adhésive |
| TUFTEC H1052 | 220 | 0.46 | adhésive |
| TUFTEC H1075 | 250 | 0.34 | adhésive |
| KRATON G1901X | 240 | 1.32 | adhésive |
| BUTADIÈNE STYRÈNE | 220 | 0.015 | adhésive |
| exemple 1 | 250 | 0.47 | cohésive |
| exemple 2 | 250 | 0.45 | cohésive |
| exemple 3 | 250 | 0.45 | cohésive |
| exemple 4 | 250 | 0,6 | cohésive |
| exemple 5 | 250 | 0,4 | cohésive |
| exemple 6 | 250 | 0.7 | cohésive |
| exemple 6 | 220 | 1.24 | cohésive |
| exemple 7 | 250 | 0.9 | cohésive |
| exemple 7 | 220 | 1.25 | cohésive |
| exemple 8 | 240 | 1.49 | cohésive |
| exemple 9 | 250 | 0.36 | cohésive |
| exemple 10 | 250 | 0.36 | cohésive |
| exemple 11 | 220 | 1.18 | cohésive |
| exemple 12 | 220 | 0.49 | cohésive |
| exemple 13 | 220 | 0.1 | cohésive |
| exemple 14 | 250 | 1.11 | cohésive |

On constate l'augmentation importante de la charge maximale nécessaire pour provoquer la rupture par emploi des produits de la présente invention, ainsi que la différence de nature de la rupture qui se fait dans la masse ce qui démontre l'amélioration importante de l'adhésion obtenue avec les produits de l'invention.

## Revendications

1. Copolymère séquencé greffé contenant :
- au moins une séquence de type polyoléfine ou polydiène comportant au moins un cycle succinimide substitué sur l'azote par un groupement réactif de formule
-R(-X)ₙ
dans laquelle -X représente un groupement réactif choisi parmi un groupe hydroxyle, un groupe carboxylique, un groupe carboxamide, un groupe halogénure d'acide carboxylique, un groupe thiol, un groupe thiocarboxylique, un groupe amino, un halogène, un groupe époxy, un groupe carboxylique estérifié dont la partie ester comporte elle-même un groupe réactif, n un nombre égal ou supérieur à 1 et -R est un reste comportant au moins un atome de carbone ; et
- au moins une séquence différente de celle de type polyoléfine ou polydiène.

2. Copolymère selon la revendication 1 dans lequel -X est un groupe carboxylique.

3. Copolymère selon l'une des revendications 1 et 2 dans lequel le groupe -R- est choisi parmi les groupes hydrocarbonés aliphatiques, saturés ou insaturés, substitués ou non, les groupes aromatiques substitués ou non substitués.

4. Copolymère selon l'une des revendications 1 à 3 dans lequel -R est un reste benzénique et le groupe -X est en position méta ou para par rapport à l'atome d'azote.

5. Copolymère selon l'une des revendications 1 à 4 dans lequel la séquence de type polyoléfine ou polydiène est choisie dans le groupe formé par les polyisoprènes, les polybutadiènes, les poly (éthylène-butylène), poly (éthylène-propylène), ou autres polyoléfines et sont éventuellement greffées par des chaînons de type polyisoprénique ou polybutadiénique.

6. Copolymère selon l'une des revendications 1 à 4 dans lequel la séquence de type polyoléfine est une séquence poly (éthylène-butylène),

7. Copolymère selon l'une des revendications 1 à 6 dans lequel les séquences autres que celles de type polyoléfine ou polydiène sont issues d'une polymérisation par addition, par condensation ou par ouverture de cycle et sont choisies parmi les polystyrènes, les polyvinyles et leurs dérivés, les poly-vinyl-acétals, poly-acétates de vinyle,- polyalcools vinyliques, les polyesters vinyliques ou les polyéthers vinyliques, les polysulfures, les polyacrylonitriles, les polyéthers, les polyesters, les polyacides acryliques, les polyamides, les polyimides, les polyamide-imides, les polyuréthannes, les polyurées, les poly-uréthanne-urées, les poly-ester-uréthannes, les poly-éther-uréthannes, les polysuifones, les polycétones, les polyesters aromatiques, les poly-éthylèneglycols, les polyacrylates et polymethacrylates, les polysiloxanes, les polyéther-sulfones, les poly-éther-cétones, les polymères organo-métalliques et les polymères contenant du phosphore ou d'autres hétéroatomes.

8. Copolymère selon l'une des revendications 1 à 6 dans lequel le copolymère séquencé contenant au moins une séquence de type polyoléfine ou polydiène et au moins une séquence différente de celle de type polyoléfine ou polydiène est un élastomère thermoplastique.

9. Copolymère selon la revendication 7 ou 8 dans lequel les séquences autres que celles de type polyoléfine ou polydiéne sont des séquences polystyrènes.

10. Procédé de préparation d'un copolymère séquence greffé selon l'une des revendications 1 à 9 **caractérisé en ce qu'**il est obtenu par mise en contact d'un copolymère séquence contenant au moins une séquence de type polyoléfine ou polydiène et au moins une séquence différente de cette de type polyoléfine ou polydiène, à l'état fondu, avec au moins un composé comportant un cycle maléimide substitué sur l'azote par un groupement réactif de formule -R(-X)ₙ, tel que défini précédemment, au sein d'un mélangeur ou dans une extrudeuse.

11. Copolymère séquencé greffé **caractérisé en ce qu'**il est obtenu par réaction d'au moins un polyépoxyde contenant dans sa molécule au moins deux groupes époxydes sur un copolymère selon l'une des revendications 1 à 9 ou sur un copolymère préparé selon la revendication 10.

12. Copolymère selon la revendication 11 dans lequel le polyépoxyde contenant dans sa molécule au moins deux groupes époxydes est choisi dans le groupe formé par les polyépoxydes aliphatiques, les polyépoxydes cycloaliphatiques, les polyépoxydes aromatiques et de préférence parmi les composés du groupe formé par le diglycidyléther du bis-phénol-A ou celui du bis-phénol-F, le triglycidyléther-isocyanurale et/ou le triglycidyléther-cyanurate et/ou le triglycidyl-cyanurate et/ou le triglycidyl-isocyanurate ou les époxydes novolaques ou les mélanges d'au moins deux de ces composés.

13. Procédé de préparation d'un copolymère séquence greffé selon la revendication 11 ou 12 **caractérisé en ce que** :
- dans une étape (a), on met en contact un copolymère séquencé contenant au moins une séquence de type polyoléfine ou polydiène et au moins une séquence différente de celle de type polyoléfine ou polydiène. à l'état fondu, avec au moins un composé comportant un cycle maléimide substitué sur l'azote par un groupement réactif de formule -R(-X)ₙ, tel que défini précédemment, au sein d'un mélangeur au dans une extrudeuse ;
- puis, dans une étape (b), on introduit au sein du mélangeur ou dans l'extrudeuse au moins un composé contenant dans sa molécule au moins deux groupes époxydes.

14. Adhésif **caractérisé en ce qu'**il comprend au moins un copolymère selon l'une des revendications 1 à 9, 11 et 12 ou un copolymère préparé par un procédé selon l'une des revendications 10 et 13.

15. Comptabilisant **caractérisé en ce qu'**il comprend au moins un copolymère selon l'une des revendications 1 à 9, 11 et 12 ou un copolymère préparé par un procédé selon l'une des revendications 10 et 13.

16. Agent résiliant **caractérisé en ce qu'**il comprend au moins un copolymère selon l'une des revendications 1 à 9, 11 et 12 ou un copolymère préparé par un procédé selon l'une des revendications 10 et 13.

17. Mélange de polymères **caractérisé en ce qu'**il comprend au moins deux polymères différents l'un de l'autre dont l'un au moins est un copolymère selon l'une des revendications 1 à 9, 11 et 12 ou un copolymère préparé par un procédé selon l'une des revendications 10 et 13.

18. Matériau multicouche **caractérisé en ce qu'**il comprend un mélange selon la revendication 17.

## Claims

1. A graft stereoblock copolymer which contains :
- at least one polyolefin or polydiene sequence comprising at least one succinimide ring substituted on the nitrogen atom by a reactive group with formula -R(-X)ₙ, where -X represents a reactive group selected from a hydroxyl group, a carboxyl group, a carboxamide group, a carboxylic acid halide group, a thiol group, a thiocarboxylic group, an amino group, a halogen, an epoxy group, or an esterified carboxyl group, the ester portion of which comprises a reactive group , n is a number greater than or equal to 1 and
- R is a residue containing at least one carbon atom; and
- at least one sequence of a variety of natures, different from a polyolefin or polydiene.

2. A copolymer according to claim 1, in which the reactive group -X is a carboxyl group .

3. A copolymer according to any one of claims 1 to 2, in which the -R- group is selected from substituted or non substituted, saturated or unsaturated aliphatic hydrocarbon groups, and substituted or non substituted aromatic groups.

4. A copolymer according to any one of claims 1 to 3, in which -R is a benzene residue and the group -X is in the meta- or para- position with respect to the nitrogen atom.

5. A copolymer according to any one of claims 1 to 4, in which the polyolefin or polydiene type sequence is selected from the group formed by polyisoprenes, polybutadienes, poly(ethylene-butylene), poly(ethylene-propylene), or other polyolefins and are optionally grafted by polyisoprene or polybutadiene links.

6. A copolymer according to any one of claims 1 to 4, in which the polyolefin type sequence is a poly(ethylene-butylene) sequence.

7. A copolymer according to any one of claims 1 to 6, in which the sequences which are other than polyolefin or polydiene are the result of addition polymerisation, condensation or ring opening and selected among polystyrenes, polyvinyls and their derivatives, polyvinylacetals, polyvinylacetates, polyvinyl alcohols, polyvinyl esters or polyvinyl ethers, polysulfides, polyacrylonitriles, polyethers, polyesters, polyacrylic acids, polyamides, polyimides, polyamide imides, polyurethanes, polyureas, polyurethane ureas, polyeste urethanes, polyether urethanes, polysulfones, polyketones, aromatic polyesters, polyethylene glycols, polyacrylates and polymethacrylates, polysiloxanes, polyether sulfones, polyether ketones, organometallic polymers, and polymers containing phosphorous or other heteroatoms.

8. A copolymer according to any one of claims 1 to 6, in which the stereoblock copolymer containing at least one polyolefin or polydiene type sequence and at least one sequence of a variety of natures, different from a polyolefin or polydiene is a thermoplastic elastomer..

9. A copolymer according to claim 7 or 8, in which the sequences different from polyolefin or polybutadien type are polystyrene sequences.

10. A process for preparing a graft stereoblock copolymer according to any one of claims 1 to 9, **characterized in that** it is obtained by bringing a stereoblock copolymer containing at least one polyolefin or polydiene type sequence and at least one sequence of a variety of natures different from a polyolefin or polydiene, into contact in the molten state with at least one compound comprising a maleimide ring substituted on the nitrogen atom by a reactive group with formula -R(-X)ₙ as defined above, in a kneader or extruder.

11. A graft stereoblock copolymer, **characterized in that** it is obtained by reacting at least one polyepoxide containing at least two epoxy groups in its molecule with a copolymer according to any one of claims 1 to 9 or with a copolymer prepared in accordance with claim 10.

12. A copolymer according to claim 11, in which the polyepoxide containing at least two epoxy groups in its molecule is selected from the group formed by aliphatic polyepoxides, cycloaliphatic polyepoxides and aromatic polyepoxides and preferably from compounds from the group formed by the diglycidylether of bis-phenol-A or of bis-phenol-F, triglycidylether-isocyanurate and/or triglycidylether-cyanurate and/or triglycidyl-cyanurate and/or triglycidyl-isocyanurate or novolac epoxides or mixtures of at least two of these compounds.

13. A process for preparing a graft stereoblock copolymer according to claim 11 or claim 12, **characterized in that**:
• in a step a), one stereoblock copolymer containing at least polyolefin or polydiene type sequence and at least one sequence of a variety of natures different from a polyolefin or polydiene is brought into contact in the molten state with at least one compound comprising a maleimide ring substituted on the nitrogen atom by a reactive group with formula -R(-X)ₙ as defined above, in a kneader or in an extruder;
• then in a step b), at least one compound containing at least two epoxy groups in its molecule is introduced into the kneader or extruder.

14. An adhesive, **characterized in that** it comprises at least one copolymer according to any one of claims 1 to 9, 11 and 12 or a copolymer prepared by a process according to any one of claims 10 and 13.

15. A compatibiliser, **characterized in that** it comprises at least one copolymer according to any one of claims 1 to 9, 11 and 12 or a copolymer prepared by a process according to any one of claims 10 and 13.

16. A resiliency agent, **characterized in that** it comprises at least one copolymer according to any one of claims 1 to 9, 11 and 12 or a copolymer prepared by a process according to any one of claims 10 and 13.

17. A mixture of polymers, **characterized in that** it comprises at least two polymers which are different from each other, at least one of which is a copolymer according to any one of claims 1 to 9, 11 and 12 or a copolymer prepared by a process according to any one of claims 10 and 13.

18. A multilayered material, **characterized in that** it comprises a mixture according to claim 17.

## Patentansprüche

1. Sequenziertes gepfropftes Copolymer, enthaltend:
- mindestens eine Sequenz vom Typ Polyolefin oder Polydien, die mindestens einen Succinimidring umfasst, dessen Stickstoff substituiert ist durch eine reaktive Gruppe mit der Formel
-R(-X)ₙ
worin -X eine reaktive Gruppe darstellt, ausgewählt aus einer Hydroxylgruppe, einer Carboxylgruppe, einer Carboxamidgruppe, einer Halogenidgruppe der Carbonsäure, einer Thiolgruppe, einer Thiocarboxylgruppe, einer Aminogruppe, einem Halogen, einer Epöxygruppe, einer veresterten Carboxylgruppe, deren -Esteranteil selbst eine reaktive Gruppe umfasst, n eine Zahl gleich oder größer 1 ist und -R ein Rest ist, der mindestens ein Kohlenstoffatom umfasst; und
- mindestens eine Sequenz, die sich von der vom. Typ, Polyolefin oder Polydien unterscheidet.

2. Copolymer nach Anspruch 1, worin -X eine Carboxylgruppe ist.

3. Copolymer nach einem der Ansprüche 1 und 2, worin die Gruppe -R- ausgewählt ist aus den aliphatischen Kohlenwasserstoffgruppen, substituiert oder nicht, den substituierten oder nicht substituierten aromatischen Gruppen.

4. Copolymer nach einem der Ansprüche 1 bis 3, worin -R ein Benzenrest ist und die Gruppe -X in der Meta- oder Paraposition ist, im Verhältnis zum Stickstoffatom.

5. Copolymer nach einem der Ansprüche 1 bis 4, worin die Sequenz des Typs Polyolefin oder Polydien ausgewählt ist aus der Gruppe, gebildet aus den Polyisoprenen, den Polybutadienen, Poly(ethylen-butylen), Poly(ethylen-propylen) oder anderen Polyolefinen, und die gegebenenfalls durch Glieder vom Typ Polyisopren oder Polybutadien gepfropft sind.

6. Copolymer nach einem der Ansprüche 1 bis 4, worin die Sequenz vom Typ Polyolefin eine Poly(ethylen-butylen)-Sequenz ist.

7. Copolymer nach einem der Ansprüche 1 bis 6, worin die Sequenzen, die nicht jene vom Typ Polyolefin oder Polydien sind, hervorgegangen sind aus einer Polymerisation durch Zugabe, durch Kondensation oder durch Ringöffnung, und ausgewählt sind aus den Polystyrolen, den Polyvinylen und ihren Derivaten, den Polyvinylacetalen, Polyvinylacetaten; Polyvinylalkoholen, den Polyvinylestern oder den Polyvinylethern, den Polysulfiden, den Polyacrylnitrilen, den Polyethern, den Polyestern, den Polyacrylsäuren, den Polyamiden, den Polyimiden, den Polyamidimiden, den Polyurethanen, den Polyharnstoffen, den Polyurethanharnstoffen, den Polyesterurethanen, den Polyetherurethanen, den Polysulfonen, den Polyketonen, den aromatischen Polyestern, den Polyethylenglycolen, den Polyacrylaten und Polymethacrylaten, den Polysiloxanen, den Polyethersulfonen, Polyetherketonen, den organometallischen Polymeren und den Polymeren, die Phosphor oder andere Heteroatome enthalten.

8. Copolymer nach einem der Ansprüche 1 bis 6, worin das sequenzierte Copolymer, das mindestens eine Sequenz vom Typ Polyolefin oder Polydien enthält, und mindestens eine Sequenz, die vom Typ Polyolefin oder Polydien verschieden ist, ein thermoplastisches Elastomer ist.

9. Copolymer nach Anspruch 7 oder 8, worin die Sequenzen, die nicht jene vom Typ Polyolefin oder Polydien sind, Polystyrolsequenzen sind.

10. Verfahren zur Herstellung eines gepfropften sequenzierten Copolymers nach einem der Ansprüche 1 bis 9, **dadurch gekennzeichnet, dass** es durch Kontaktieren eines sequenzierten Copolymers erhalten wird, das mindestens eine Sequenz vom Typ Polyolefin oder Polydien enthält, und mindestens eine Sequenz, die vom Typ Polyolefin oder Polydien verschieden ist, in geschmolzenem Zustand, mit mindestens einer Verbindung, die einen Maleimidring umfasst, die auf Stickstoff durch eine reaktive Gruppe der Formel -R(-X)ₙ, wie zuvor definiert, substituiert ist, in einem Mischer oder in einem Extruder.

11. Sequenziertes gepfropftes Copolymer, **dadurch gekennzeichnet dass** es durch Reaktion mindestens eines Polyepoxids erhalten wird, das in seinem Molektil mindestens zwei Expoxidgruppen auf einem copolymer nach einem der Ansprüche 1 bis 9 oder auf einem Copolymer, das nach Anspruch 10 hergestellt ist, enthält.

12. Copolymer nach Anspruch 11, worin das Polyepoxid, das in seinem Molekül mindestens zwei Epoxidgruppen enthält, ausgewählt aus der Gruppe, gebildet durch die aliphatischen Polyepoxide, die cycloaliphatischen Polyepoxide, die aromatischen Polyepoxide und vorzugsweise aus den Verbindungen der Gruppe, gebildet aus dem Diglycidylether des bis-Phenol-A oder jenem des bis-Phenol-F, dem Triglycidyletherisocynurat und/oder dem Triglycidylethercyanurat und/oder dem Triglycidylcyanurat und/oder dem Triglycidylisocyanurat oder den Novolakepoxiden oder den Mischungen mindestens zwei dieser Verbindungen.

13. Verfahren zur Herstellung eines gepfropften sequenzierten Copolymers nach Anspruch 11 oder 12, **dadurch gekennzeichnet, dass**:
- in einem Schritt (a), ein sequenziertes Copolymer kontaktiert wird, das mindestens eine Sequenz vom Typ Polyolefin oder Polydien enthält, und mindestens eine Sequenz, die vom Typ Polyolefin oder Polydien verschieden ist, in geschmolzenem Zustand, mit mindestens einer Verbindung, die einen Maleimidring umfasst, der auf dem Stickstoff durch eine reaktive Gruppe mit der Formel -R(-X)ₙ, wie etwa zuvor definiert, substituiert ist, in einem Mischer oder in einem Extruder;
- dann wird in Schritt (b) in den Mischer oder in den Extruder mindestens eine Verbindung eingeführt, die in ihrem Molekül mindestens zwei Epoxidgruppen enthalt.

14. Klebstoff, **dadurch gekennzeichnet, dass** er mindestens ein Copolymer nach einem der Ansprüche 1 bis 9, 11 oder 12 oder ein Copolymer umfasst, das nach einem Verfahren nach einem der Ansprüche 10 und 13 hergestellt wurde.

15. Compatibiliser (Verträglichkeitsmacher), **dadurch gekennzeichnet, dass** er mindestens ein Copolymer nach einem der Ansprüche 1 bis 9, 11 und 12 oder ein Copolymer umfasst, das nach einem Verfahren nach einem der Ansprüche 10 und 13 hergestellt wurde.

16. Elastizitätsmittel, **dadurch gekennzeichnet, dass** es mindestens ein Copolymer nach einem der Ansprüche 1 bis 9, 11 und 12 oder ein Copolymer umfasst, das nach einem Verfahren nach einem der Ansprüche 10 und 13 hergestellt wurde.

17. Polymermischung, **dadurch gekennzeichnet, dass** sie mindestens zwei voneinander verschiedene Copolymere umfasst, wovon eines ein Copolymer nach einem der Ansprüche 1 bis 9, 11 und 12 oder ein Copolymer ist, das nach einem Verfahren nach einem der Ansprüche 10 und 13 hergestellt wurde.

18. Mehrschichtiger Werkstoff, **dadurch gekennzeichnet, dass** er eine Mischung nach Anspruch 17 umfasst.
